Europäisches Patentamt

(19) European Patent Office

Office européen des brevets

(11) Publication number: **0 008 504**
**B1**

(12) **EUROPEAN PATENT SPECIFICATION**

(45) Date of publication of patent specification: **29.06.83**

(51) Int. Cl.³: **H 01 L 33/00, G 02 B 5/14, H 01 L 31/02**

(21) Application number: **79301524.9**

(22) Date of filing: **31.07.79**

(54) **An optoelectronic semiconductor device.**

(30) Priority: **04.08.78 JP 94517/78**

(43) Date of publication of application:
**05.03.80 Bulletin 80/5**

(45) Publication of the grant of the patent:
**29.06.83 Bulletin 83/26**

(84) Designated Contracting States:
**DE FR GB SE**

(56) References cited:
**FR - A - 2 356 167**
**FR - A - 2 387 517**
**FR - A - 2 405 488**
**NL - A - 7 712 472**
**US- A - 3 628 036**

(73) Proprietor: **FUJITSU LIMITED**
**1015, Kamikodanaka Nakahara-ku**
**Kawasaki-shi Kanagawa 211 (JP)**

(72) Inventor: **Nakayama, Takayuki**
**861-2, Shimoaso, Tama-ku**
**Kawasaki-shi, Kanagawa 215 (JP)**
Inventor: **Ishihara, Michio**
**1550, Shimokurata-cho, Totsuka-ku**
**Yokohama-shi, Kanagawa 244 (JP)**
Inventor: **Inagaki, Nobuhiro**
**1-5-913, Minaminagatadanchi Nagata-cho,**
**Minami-ku**
**Yokohama-shi, Kanagawa 232 (JP)**
Inventor: **Namazu, Ryosuke**
**60-18, Shiratoridai, Midori-ku**
**Yokohama-shi, Kanagawa 227 (JP)**

(74) Representative: **Rackham, Stephen Neil et al,**
**GILL JENNINGS & EVERY 53-64 Chancery Lane**
**London WC2A 1HN (GB)**

Courier Press, Leamington Spa, England

The present invention relates to an optoelectronic semiconductor device for use in an optical signal transmission system and in particular relates to a combination of an optoelectronic semiconductor device and coupling.

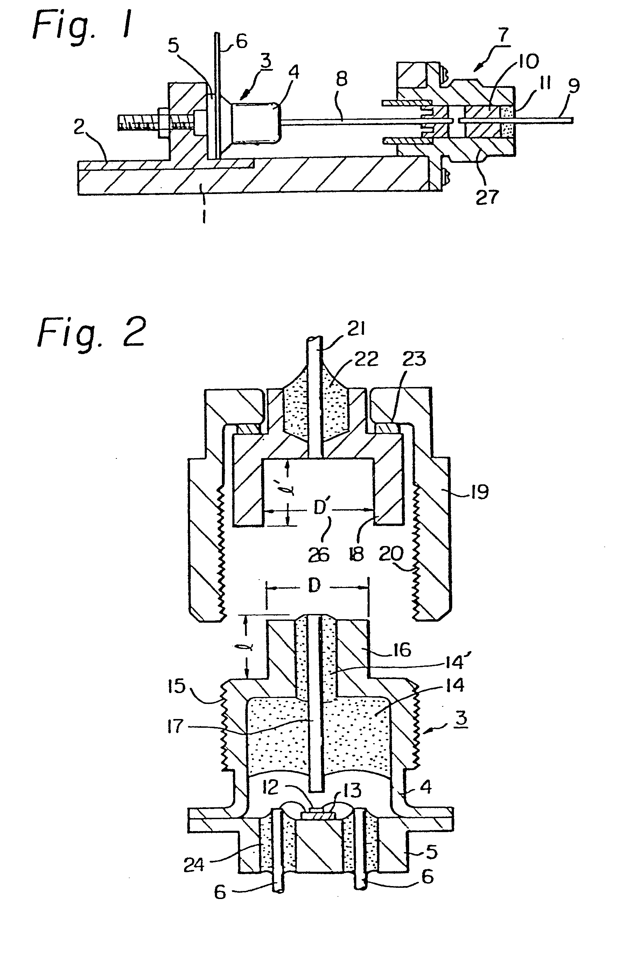

In the past, optoelectronic semiconductor devices for use as light sources in optical signal transmission systems have been complex in their construction and also complex in the connection between the optoelectronic semiconductor device and an optical transmission fibre. One such example will be discussed in more detail with reference to the drawings and other examples are shown in the specification NL—A—7712472. Figure 2 of this specification shows the construction of one such combined optoelectronic semiconductor device and coupling which comprises an optoelectronic semiconductor element mounted in a housing having a screwthread on its outer surface and containing an optical fibre one end of which is optically coupled to the optoelectronic semiconductor element and the other end of which terminates remote from the optoelectronic element. An optical transmission fibre is secured to an inside member and then a hollow nut which screws onto the screwthread on the outside of the housing embraces the inside member to couple the optical transmission fibre to the optical fibre in the housing. The housing is formed from the solid with the optical fibre held by the housing being fixed to a bore in the housing, with the optoelectronic semiconductor element mounted on a heat sink which is in turn, mounted in a recess formed in the housing. The open end of this recess is subsequently closed by a cover plate. In this example, the other end of the optical fibre held by the housing terminates in the base of a recess in the housing and the inside member connected to the end of the optical transmission fibre inserted into this recess in the housing.

It is an aim of the present invention to provide an optoelectronic semiconductor device of simple construction which can readily be connected to an optical transmission fibre, and in accordance with this invention an optoelectronic semiconductor device and coupling is characterised in that the housing of the optoelectronic semiconductor device is formed by a mounting supporting the optoelectronic semiconductor element and a cap including the screwthread and supporting the optical fibre with the other end of the optical fibre being held by a projection projecting away from the mounting, and in that the inside member includes a recess which mates with the projection to ensure alignment between the optical fibre and the transmission fibre.

The projection and its corresponding recess may be cylindrical or frusto-conical and the screwthread on the outside of the cap may also be used to connect the device to a support.

Two examples of a device in accordance with this invention will now be described and contrasted with the prior art with reference to the accompanying drawings; in which:—

Figure 1 is a section through an earlier light source and connector mechanism;

Figure 2 is a section through an exploded first example of a device and connector mechanism in accordance with this invention;

Figure 3(A) is a plan of a second example of a device and connector mechanism in accordance with this invention; and

Figure 3(B) is a section taken along the line B—B shown in Figure 3(A).

In the earlier optoelectronic semiconductor device and connector mechanism shown in Figure 1, an optoelectronic semiconductor device 3 is secured to a support member 2 on a base 1. The optoelectronic semiconductor device 3 comprises a mounting 5, a terminal 6, and a cap 4. A light emitting element (not shown) is mounted on the mounting 5. An optical fibre for transmitting light emitted by the element is housed in a protective sleeve 8. The protective sleeve 8 is secured to the cap 4 by a synthetic resin. A connector 7 is used to couple the optical fibre within the protective sleeve 8 to an optical transmission fibre 9. The connector 7 comprises a body 27 and an inside member 10. The inside member 10 and the optical fibre 9 are joined together by a synthetic resin 11. The protective sleeve 8 is eccentrically rotated by a known double eccentric wheel-type positioning device to align the fibre in the protective sleeve 8 with the optical fibre 9. When the optical axes of the two optical fibres are aligned with one another, the protective sleeve 8 is fixed to the body 27. However, this connection and alignment takes a considerable time and has to be repeated each time that the device is uncoupled from the transmission fibre.

In Figure 2, an optoelectronic semiconductor device 3 in accordance with this invention is illustrated. A substrate 13 of beryllia, beryllium oxide: BeO, is mounted on a metal mounting 5 of iron. An optoelectronic semiconductor element 12, which is, for example, a light emitting diode (LED), a laser diode, a photo diode, an avalance photo diode or a pin diode, is mounted on the substrate 13. Electrodes of the element 12 are connected to terminals 6 through a lead and a metallized layer (not shown) to which the optoelectronic semiconductor element 12 is fixed, or only through a lead. The two terminals 6 of iron-nickel alloy penetrate through the mounting 5 and project beneath it. Each terminal 6 is sealingly secured to the mounting 5 by a sealing glass 24. A metallic cap 4 of nickel silver is welded to the mounting 5 by a resistance welding technique. An optical fibre 17 is located along the central axis of the cap 4. The optical fibre 17 is secured to the cap 4 by a glass material or a synthetic resin 14. A cylindrical projection 16 is formed on the top of the cap 4. The end surface of the optical fibre 17 is exposed at the top surface of the projection 16. In the top surface, the optical fibre 17 is located at the centre of the circular top surface of the projection 16.

An inside member 18 of, for example, stainless steel, has a recess 26 which mates with the projection 16. An optical transmission fibre 21 is secured to the inside member 18 by a glass material or a synthetic resin 22. The inside diameter D' and the depth l' of the recess 26 are equal to, or slightly greater than, the outside diameter D and the height l of the projection 16. The optical transmission fibre 21 is located at the centre of the recess 26. In practice, the depth l' is usually slightly larger than the height l of the projection 16 so that a gap of several microns is formed between the end surfaces of the optical fibres 17 and 21, to prevent them being damaged by contacting one another.

Another screw thread 20 which engages the screw thread 15 is formed on an inside of a nut 19 made of, for example, stainless steel. The nut has the form of a cap nut and the inside member 18 is held on the projection 16 of the cap 4 by screwing the nut 19 onto the screw thread 15 with the thrust being applied between them via a washer 23. As the inside member 18 mates with the projection 16, the optical axes of the optical fibres 17 and 21 are aligned with each other, because the optical axes of the optical fibre 17 and the transmission fibre 21 are both located at the centre of the projection 16 and the centre of the recess 26 of the inside member 18, respectively, and these have a common axis when the member 18 mates with the projection 16.

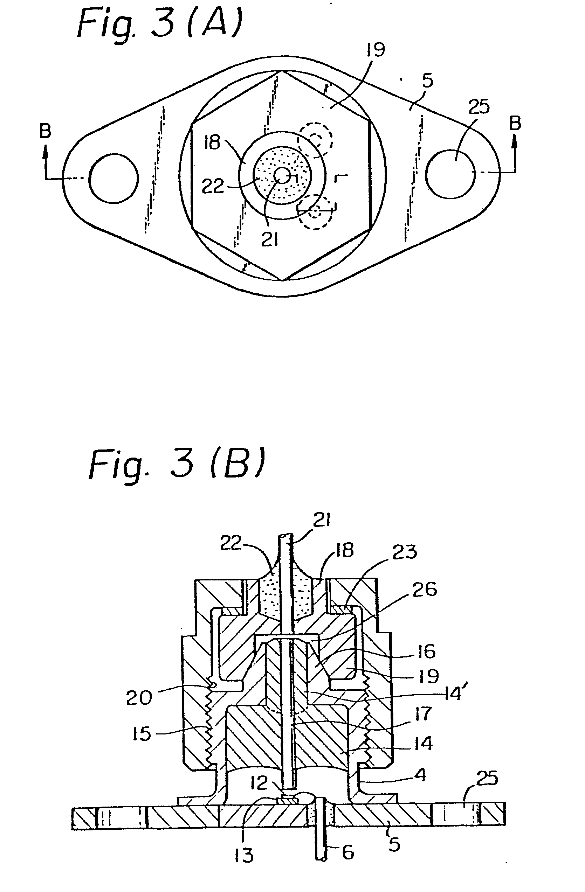

A second example shown in Figures 3A and B is generally similar to the first but the cap 4 has a frusto-conical projection 16 and a recess 26 of the inside member 18 has a corresponding shape. The mounting 5 has holes 25 for securing the device to a support member.

The glass material or synthetic resin 14 may be supplied only to the inside portion 14' of the projection 16, as shown by a broken line in Figure 2 and Figure 3B, instead of filling the entire inside portion of the cap 4 with the glass material or synthetic resin 14. The optical fibre 17 can be securely and accurately fixed to the cap 4 with only a small amount of glass material or synthetic resin.

The optoelectronic semiconductor device 3 may be connected to a support member which includes a female screw thread into which the screw thread 15 of the cap 4 is screwed. Thus, the optoelectronic semiconductor device can be mounted on a circuit board including a screw threaded hole.

In another arrangement, the optoelectronic semiconductor device can be fixed to a circuit board having a plain hole by inserting the cap 4 through the hole from one side of the board, and then fixing a nut onto the cap from the other side of the board. In addition to the nut to secure the device, another nut 19 installed on the end of an optical transmission fibre, as illustrated in Figures 2 and 3, can be screwed onto the cap so as to optically couple the optoelectronic semiconductor device to the transmission fibre.

As the projection 16 and the recess 26 mate together they share a common axis and thus, the optical axes of the fibres 17 and 21 are aligned with one another automatically. This results in a good optical coupling between the fibres 17 and 21. The inside member 18 is urged against the cap 4 by screwing the nut 19 onto the screw thread 15 formed around the cap 4. Such a construction is simple and enables the connections to be made and broken easily. Therefore, when necessary, it is easy to replace a part.

**Claims**

1. An optoelectronic semiconductor device and coupling comprising an optoelectronic semiconductor element (12) mounted in a housing having a screwthread (15) on its outer surface and containing an optical fibre (17) one end of which is optically coupled to the optoelectronic semiconductor element (12) and the other end of which terminates remote from the optoelectronic semiconductor element (12), an optical transmission fibre (21) secured to an inside member (18), and a hollow nut (19) which screws onto the screwthread (15) and embraces the inside member (18) to couple the optical transmission fibre (21) to the optical fibre (17), characterised in that the housing is formed by a mounting (5) supporting the optoelectronic semiconductor element (12) and a cap (4) including the screwthread (15) and supporting the optical fibre (17) with the other end of the optical fibre (17) being held by a projection (16) projecting away from the mounting (5), and in that the inside member (18) includes a recess (26) which mates with the projection (16) to ensure alignment between the optical fibre (17) and the transmission fibre (12).

2. An optoelectronic semiconductor device and coupling according to claim 1, in which the projection (16) and recess (26) are cylindrical.

3. An optoelectronic semiconductor device and coupling according to claim 1, in which the projection (16) and recess (26) are frusto-conical.

4. An optoelectronic semiconductor device and coupling according to any one of the preceding claims, further characterised in that it is secured to a support by means of the screwthread (15) provided on the cap (4).

5. An optoelectronic semiconductor device and coupling according to any one of the preceding claims, further characterised in that the semiconductor element (12) is a light emitting diode, a laser diode, a photo diode, an avalanche photo diode or a pin diode.

## Revendications

1. Combinaison dispositif semi-conducteur opto-électronique et couplage comprenant un élément semi-conducteur opto-électronique (12) monté dans un boîtier possédant un filetage (15) à sa surface externe et contenant une fibre optique (17) dont une extrémité est optiquement couplée à l'élément semi-conducteur opto-électronique (12) et dont l'autre extrémité se termine à une certaine distance de l'élément semi-conducteur opto-électronique (12), une fibre de transmission optique (21) fixée à un élément interne (18), et un écrou creux (19) qui se visse sur le filetage (15) et entoure l'élément interne (18) afin de coupler la fibre de transmission optique (21) à la fibre optique (17), caractérisée en ce que le boîtier est formé par une monture (5) soutenant l'élément semi-conducteur opto-électronique (12) et un capuchon (4) comportant le filetage (15) et soutenant la fibre optique (17) de façon que l'autre extrémité de la fibre optique (17) soit maintenue par une partie saillante (16) qui fait saillie de la monture (5), et en ce que l'élément interne (18) comporte un évidement (26) qui concorde avec la partie saillante (16) de façon à assurer l'alignement entre la fibre optique (17) et la fibre de transmission (12).

2. Combinaison dispositif semi-conducteur opto-électronique et couplage selon la revendication 1, dans laquelle la partie saillante (16) et l'évidement (26) sont cylindriques.

3. Combinaison dispositif semi-conducteur opto-électronique et couplage selon la revendication 1, dans laquelle la partie saillante (16) et l'évidement (26) sont tronconiques.

4. Combinaison dispositif semi-conducteur opto-électronique et couplage selon l'une quelconque des revendications précédentes, caractérisée en outre en ce qu'elle est fixée à un support par l'intermédiaire du filetage (15) ménagé sur le capuchon (4).

5. Combinaison dispositif semi-conducteur opto-électronique et couplage selon l'une quelconque des revendications précédentes, caractérisée en outre en ce que l'élément semi-conducteur (12) est une diode électroluminescente, une diode laser, une photodiode, une photodiode à avalanche, ou une diode p-i-n.

## Patentansprüche

1. Optoelektronische Halbleitervorrichtung und Kupplung, mit einem optoelektronischen Halbleirerelement (12), welches in einem Gehäuse befestigt ist, das an seiner äußeren Oberfläche ein Schraubgewinde (15) aufweist und eine optische Faser (17) enthält, deren eines Ende optisch mit dem optoelektronischen Halbleiterelement (12) gekuppelt ist und deren anderes Ende von dem optoelektronische Halbleiterelement (12) entfernt endet, mit einer optischen Übertragungsfaser (21), welche an einem Innenteil (18) befestigt ist, und mit einer hohlen Schraubenmutter (19), welche auf das Schraubgewinde (15) aufschraubbar ist und das Innenteil (18) umfaßt, um die optische Übertragunsfaser (21) an die optische Faser (17) zu kuppeln, dadurch gekennzeichnet, daß das Gehäuse von einem Aufbau (5) gebildet ist, welcher das optoelektronische Halbleiterelement (12) und eine Kappe (4) trägt, welche das Schraubgewinde (15) aufweist und die optische Faser (17) trägt, während das andere Ende der optischen Faser (17) von einem Vorsprung (16) gehalten wird, welcher von dem Aufbau (5) vorsteht, und daß das Innenteil (18) eine Ausnehmung (26) aufweist, welche mit dem Vorsprung (16) zusammenpaßt, um eine Ausrichtung zwischen der optischen Faser (17) und der Übertragungsfaser (21) sicherzustellen.

2. Optoelektronische Halbleitervorrichtung und Kupplung nach Anspruch 1, bei welcher der Vorsprung (16) und die Ausnehmung (26) zylindrisch sind.

3. Optoelektronische Halbleitervorrichtung und Kupplung nach Anspruch 1, bei welcher der Vorsprung (16) und die Ausnehmung (26) kegelstumpfförmig sind.

4. Optoelektronische Halbleitervorrichtung und Kupplung nach einem der vorhergehenden Ansprüche, dadurch gekennzeichnet, daß sie mit Hilfe des Schraubgewindes (15) an der Kappe (4) an dem Aufbau befestigt ist.

5. Optoelektronische Halbleitervorrichtung und Kupplung nach einem der vorhergehenden Ansprüche, dadurch gekennzeichnet, daß das Halbleiterlement (12) eine Leuchtdiode, eine Laserdiode, eine Photodiode, eine Lawinendiode oder eine Stiftdiode ist.

Fig. 1

Fig. 2

0 008 504

*Fig. 3 (A)*

*Fig. 3 (B)*

2